## Europäisches Patentamt
## European Patent Office
## Office européen des brevets

(19)

(11) Veröffentlichungsnummer: **0 262 287 B1**

(12)

# EUROPÄISCHE PATENTSCHRIFT

(45) Veröffentlichungstag der Patentschrift: **13.11.91**

(51) Int. Cl.⁵: **F16L 37/12**

(21) Anmeldenummer: **87104348.5**

(22) Anmeldetag: **24.03.87**

(54) Lösbare Steckkupplung.

(30) Priorität: **26.09.86 DE 3632808**

(43) Veröffentlichungstag der Anmeldung:
**06.04.88 Patentblatt 88/14**

(45) Bekanntmachung des Hinweises auf die
Patenterteilung:
**13.11.91 Patentblatt 91/46**

(84) Benannte Vertragsstaaten:
**DE ES FR GB IT SE**

(56) Entgegenhaltungen:
**DE-B- 1 947 939**
**DE-B- 2 921 607**
**US-A- 2 784 987**
**US-A- 4 214 586**
**US-A- 4 398 757**

(73) Patentinhaber: **WOCO Franz-Josef Wolf & Co.**
**Sprudelallee 19**
**W-6483 Bad Soden-Salmünster(DE)**

Patentinhaber: **Firma Daimler-Benz AG**
**Postfach**
**W-7000 Stuttgart 60(DE)**

(72) Erfinder: **Wolf, Franz Josef**
**Sprudelallee 19**
**W-6483 Bad Soden-Salmünster(DE)**
Erfinder: **Frischkorn, Heinz**
**Schlossstrasse 2**
**W-6497 Steinau(DE)**
Erfinder: **Kaminski, Peter**
**Am Rausch 16**
**W-6460 Gelnhausen 4(DE)**
Erfinder: **Feichtiger, Dieter**
**Mittelbühlweg 38**
**W-7031 Aidlingen-1(DE)**
Erfinder: **Möller, Hermann**
**Blücherstrasse 11**
**W-7034 Gärtringen(DE)**
Erfinder: **Andres, Rudolf**
**Watzmannstrasse 59**
**W-7032 Sindelfingen(DE)**
Erfinder: **Mötting, Götz**
**Lauchstrasse 14**
**W-7030 Böblingen(DE)**

(74) Vertreter: **Jaeger, Klaus, Dipl.-Chem. Dr. et al**
**Jaeger, Steffens & Köster Patentanwälte**
**Pippinplatz 4a**
**W-8035 München-Gauting(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft eine lösbare Steckkupplung der im Oberbegriff des Anspruchs 1 genannten Art.

Dementsprechend betrifft die Erfindung eine Steckkupplung zum Verbinden und Anschließen von Schläuchen, insbesondere Schläuchen mit Durchmessern bis zu ungefähr 1 oder 2 cm, insbesondere für Schläuche mit Durchmessern von 3, 4 oder 5 mm. Die Steckkupplung ist als Steckerkupplung mit einer Kupplungsbuchse und einem Stecker ausgebildet. Dabei ist der Stecker selbst als durchgehend und beidseitig offene Hülse ausgebildet, an der, bezogen auf die Kupplungsbuchse, axial außen der anzuschließende Schlauch befestigt ist, während das gegenüberliegende Ende des Steckers, das stiftseitige Einsteckende, der fluiddichten Abdichtung zwischen Stecker und Kupplungsbuchse dient.

Aus der deutschen Auslegeschrift DE 29 21 607 B1 ist eine Steckverbindung für Schlauchleitungen in Kraftfahrzeugen bekannt, die im wesentlichen aus einer Kupplungsbuchse, einem beidseitig offenen hülsenförmigen Stecker und einem Dichtring besteht. Der Dichtring ist dabei in einer Ringnut am einsteckseitigen zylindrischen Ende des Steckers angeordnet. Die Befestigung des Stekkers in der Kupplungsbuchse erfolgt über einen radial federnden Rasthaken, der bei eingestecktem Stekker einen außenflanschartigen Haltebereich am Stecker hintergreift. Ein Lösen dieser bekannten Steckkupplung ist nur dadurch möglich, daß der Rasthaken, sei es von Hand oder durch ein entsprechendes Werkzeug, durch Aufbringen einer Radialkraft nach radial außen gezwungen wird. Ein solches Lösen ist jedoch insbesondere dann, wenn bei höher belasteten Steckverbindungen mehrere Rasthaken konzentrisch zur Mittelachse der Steckverbindung verteilt verwendet werden, überaus umständlich, da sämtliche Rasthaken gleichzeitig nach radial auswärts gezwungen werden müssen.

Aus der US-A-4 214 586 ist eine Steckkupplung für den Bereich der Anastomose bzw. zur Herstellung von Gefäßprothesen aus Kunststoff bekannt. Auch bei dieser bekannten Steckkupplung ist ein Lösen durch Aufbringen einer ausschließlich axial wirkenden Kraft zwischen Stecker und Buchse nicht möglich; vielmehr müssen auch hier die zur Herstellung der Steckverbindung verwendeten Rastfederelemente an der Kupplungsbuchse durch ein Werkzeug gleichzeitig nach radial außen gezwungen werden.

Der Erfindung liegt die Aufgabe zugrunde, eine lösbare Steckkupplung der gattungsgemäßen Art so auszugestalten, daß sie aus möglichst wenigen Einzelteilen mit möglichst geringem Montageaufwand, also der Massenproduktion zugänglich, besteht und herstellbar ist, daß die Steckverbindung zwischen Stecker und Kupplungsbuchse leicht und ohne nennenswerten Einschubkraftaufwand herstellbar ist, daß sie insgesamt an allen ihren beteiligten Teilen absolut fluiddicht ist, und daß sie schließlich nur unter Aufbringung größerer in Richtung der Längsachse der Kupplung wirkender Kräfte, vorzugsweise durch Ansetzen eines Hebelwerkzeuges, lösbar ist.

Zur Lösung dieser Aufgabe schafft die Erfindung eine lösbare Steckkupplung mit Stecker und Kupplungsbuchse für Schläuche, die die im kennzeichnenden Teil des Anspruchs 1 genannten Merkmale aufweist.

Der erfindungswesentliche Gedanke beruht also darauf, zur Herstellung einer Schlauchverbindung nicht mehr den Schlauch selbst mit einem Stutzen zu Anschlußzwecken zu verbinden, sondern den Schlauch selbst mit einem Steckerteil unlösbar und fluiddicht zu verbinden, um dadurch im eigentlichen Verbindungsbereich unvermeidbare Maßtoleranzen und den unerwünschten Einfluß der Extrusionsriefen von Schläuchen auszuschalten, und überdies den Stecker so auszubilden, daß er aus einem einzigen Teil, vorzugsweise einem Kunststoffspritzgießteil, besteht, und in eine Kupplungsbuchse einsteckbar ist, die ebenfalls aus einem einzigen Teil, ebenfalls vorzugsweise einem Kunststoffspritzgießteil, besteht.

Dabei sind die Rastfederungen einstückig an die Kupplungsbuchse angeformt bzw. einstückige Bestandteile dieser Buchse, so daß neben der einstückigen Kupplungsbuchse und dem einstückigen Steckerteil als drittes Teil der Steckkupplung nur noch ein Dichtungsring, ein O-Ring oder vorzugsweise ein D-Ring aus einem gummielastischen Werkstoff, zur Herstellung zuverlässig und dauerhaft dichter einfach steckbarer und unter Kraftaufwand lösbarer Steckkupplungen erforderlich sind. Die Steckkupplung gemäß der Erfindung eignet sich aufgrund dieser Vorteile insbesondere zum Einsatz im Rahmen der Serienfertigung und Massenfertigung, so beispielsweise in der Automobilindustrie, für pneumatische Steuerleitungssysteme und Stelleitungssysteme im Werkzeugmaschinenbau und in der Anlagetechnik sowie für pneumatische Steuerungssysteme im Bereich der Haushaltsgeräte und Freizeitgeräte. Auch zur Herstellung fluiddichter elektrischer Steckverbindungen kann die Kupplung vorteilhaft verwendet werden.

Der Stecker der lösbaren Steckkupplung gemäß der Erfindung ist also dadurch gekennzeichnet, daß er als beidseitig offene Hülse mit unterschiedlichen Innendurchmessern und unterschiedlichen Außendurchmessern ausgebildet und an einem seiner beiden Enden fest und fluiddicht mit dem anzuschließenden Schlauch verbunden, vorzugsweise verschweißt verklebt oder anvulkanisiert oder durch Einspritzen oder Umspritzen oder Eingießen verbunden ist. Der Stecker weist ein einsteckseitiges und ein schlauchseitiges Ende auf. Das einsteckseitige Ende des Steckers ist außen zylindrisch und stiftartig ausgebildet. Die äußere Mantelfläche dieses Steckstiftes greift durch einen O-Ring oder vorzugsweise D-Ring aus gummielastischem Werkstoff hindurch, der gegen eine axiale Verschiebung gesichert, vorzugsweise in eine in der Kupplungsbuchse ausgebildete Ringnut, insbesondere komplementär profilierte Ringnut, eingelegt ist. Die äußere Mantelfläche des Steckerstiftes ist also die eigentliche Dichtfläche des Steckers, über die er durch den Dichtring gegen die Kupplungsbuchse abgedichtet ist.

Um das Durchstecken des Steckerstiftes, dessen Mantelfläche als Dichtfläche dient, durch den Dichtring hindurch zu erleichtern und dabei insbesondere den Dichtring weder axial zu verschieben noch zu verletzen, ist die einsteckseitige Stirnseite des Steckerstiftes vorzugsweise abgerundet oder abgefast ausgestaltet.

Weiterhin können bei der Verwendung des vorzugsweise eingesetzten D-Ringes als Dichtring für die Steckverbindung die Dichtheit und die mechanische Stabilität der Steckverbindungsdichtung dadurch verbessert werden, daß die radial außenliegende Zylinderfläche des D-Ringes mit in sich in der Radialebene des Ringes geschlossen umlaufenden Mikrorillen, Mikrolippen oder Mikrostegen versehen ist, die vorzugsweise gleichmäßig über die gesamte axiale Höhe des D-Ringes verteilt sind.

Die Kupplungsbuchse kann eine einfache lineare Gegenbuchse sein, in die lediglich ein zweites Schlauchende fluiddicht verbunden eingesetzt ist, kann Bestandteil eines Gefäßes oder Gerätes sein, beispielsweise eines Membran-Stellantriebes, oder kann Bestandteil eines Verteilerstückes sein.

Am schlauchseitigen Ende des Steckers ist ein Griffteil ausgebildet, der bei bestimmungsgemäß in die Kupplungsbuchse eingestecktem Stecker aus der Buchse herausragt und in einen nach radial auswärts vorstehenden abschließenden Kragenringflansch übergeht. In diesem schlauchseitigen Abschnitt des Steckers ist dessen Innenbohrung so bemessen, daß ihr Durchmesser zumindest im wesentlichen gleich oder nur geringfügig größer als der Außendurchmesser des bezüglich seines Außendurchmessersgrößten Schlauches, der mit dem jeweiligen Stecker verbindbar ist. Gleichzeitig können jedoch auch Schläuche mit kleineren Durchmessern in demselben Stecker gasdicht und fluiddicht fixiert und so steckbar gemacht werden. Auf diese Weise können in ein und derselben Steckerhülse ohne weiteres Schläuche befestigt bzw. mit dieser Steckerhülse steckbar gemacht werden, deren Durchmesser um bis zu 20 oder 30 % Durchmesserdifferenz vom größten bis zum kleinsten Außendurchmesser des Schlauches aufweisen. In dieser Anpassungsflexibilität liegt auch ein wesentlicher Vorteil der Steckverbindung, daß nämlich mit ein und demselben aus Stecker und Buchse bestehenden Kupplungssystem Schläuche verschiedener Durchmesser miteinander verbunden werden können, so beispielsweise Schläuche mit Außendurchmessern von 3, 4 und 5 mm in einem Stecker, dessen schlauchseitige Buchse eine lichte Innenbohrung von geringfügig mehr als 5 mm aufweist. Diese Flexibilität wiederum wird durch die Innenkonusfläche ermöglicht, die den weiter mensurierten schlauchseitigen Teil der Bohrung des Steckers mit dem enger mensurierten einsteckseitigen Abschnitt der Bohrung des Steckers verbindet. Diese konische Schrägfläche dient als Zentrierfläche und, wenn die Verbindung zwischen Stecker und Schlauch als Schweißverbindung, insbesondere Reibschweißverbindung, hergestellt wird, auch als Schweißfläche.

Im Hinblick auf die zwischen dem Schlauch und dem Stecker herzustellende dauerhaft gasdichte und fluiddichte Verbindung wird als Befestigungsverfahren vorzugsweise das Reibschweißen verwendet. Gleicherweise kann die Verbindung jedoch auch durch Preßsitz, beispielsweise durch thermisches Schrumpfen, Verkleben, Verlöten oder in anderer geeigneter Weise erfolgen. Insbesondere ein Umspritzen des Schlauchendes mit dem Steckerteil oder ein Einspritzen oder Hineinextrudieren des Schlauchteils in das Steckerteil oder ein einfaches Vergußverfahren ebenso wie ein formgebendes Eingießen oder Umgießen des Steckers um das Schlauchende herum oder, alternativ, eines Schlauchformteils in den Stecker hinein, sind als wirtschaftliche Herstellungsverfahren für diese Verbindung in Betracht zu ziehen, wobei im Einzelfall die Parameter der beabsichtigten Anwendung den Ausschlag über die Auswahl des Verfahrens geben werden.

Wie bereits erwähnt, geht die Innenbohrung der Steckerhülse im mittleren Abschnitt in eine steckerstiftseitig enger mensurierte zylindrische Bohrung über. Der Durchmesser dieses stiftseitigen oder einsteckseitigen Abschnitts der durchgehenden inneren Hülsenbohrung des Steckers ist vorzugsweise zumindest im wesentlichen gleich dem Innendurchmesser des oder der anzuschließenden Schläuche.

Der Übergangsbereich von der schlauchseitig weiter mensurierten Bohrung zur einsteckseitig enger mensurierten Innenbohrung des Steckers ist vorzugsweise konisch ausgebildet, und zwar mit einem Konusöffnungswinkel im Bereich von vorzugsweise ungefähr 80 bis 90°, so daß also die Konusfläche selbst unter ungefähr 40 bis 50°, vorzugsweise im wesentlichen 45°, gegen die Mittelachse der Steckbohrung geneigt ist. Diese Abschrägung dient bei Ausbildung des Steckerstiftes aus Kunststoff und gleichzeitig auch Verwendung eines Kunststoffschlauches der Herstellung einer zuverlässig fluiddichten unlösbaren festen Verbindung zwischen dem durch radialen Schnitt erhaltenen stirnseitigen Ende des anzuschließenden Schlauches und dem Stecker durch Reibschweißen.

Nicht zuletzt auch im Hinblick auf die rationelle Durchführung eines solchen Reibschweißens ist zumindest ein axialer Abschnitt des Halteabschnitts des Steckers außen nicht rund, sondern als Sechskant ausgebildet. Dies ermöglicht ein drehfestes Greifen und Einspannen des Steckers, beispielsweise und insbesondere beim Reibschweißen. Außerdem kann durch ein solches nicht rundes, insbesondere vorzugsweise sechskantiges Profil auch, wo dies erforderlich ist, eine Verdrehsicherung des Steckers gegenüber der Steckerbuchse erreicht werden.

Die Kupplungsbuchse ist ebenfalls einstückig, und zwar vorzugsweise ebenfalls als Kunststoffspritzgießteil ausgelegt. Sie weist eine zumindest im wesentlichen zylindrische durchgehende und beidseitig offene Innenbohrung auf, in der zwei Ringnuten ausgebildet sind, eine spiegelseitige, das heißt, bezogen auf den Stecker, einsteckseitige axial schmalere Ringnut zur Aufnahme des Dichtringes aus einem elastischen Werkstoff, und axial auswärts, also kragenseitig vor dieser Ringnut eine axial breitere Ringnut zur Aufnahme eines hier als Halteabschnitt bezeichneten Abschnittes des Steckers, der einen größeren Außendurchmesser als die beiden angrenzenden Steckerabschnitte, nämlich der Steckerstiftabschnitt und der Griffabschnitt, aufweist, wodurch schlauchseitig eine Ringschulter ausgebildet ist, in die Rastelemente beim Einstecken federnd eingreifen, die am Kupplungsbuchsenkragen als nach axial einwärts vorspringende Ringrippe ausgebildet sind. Im Bereich dieser axial breiteren Ringnut der Kupplungsbuchse, die der Aufnahme des Halteabschnitts des Steckers dient, ist die Kupplungsbuchse axial geschlitzt, so daß die stehenbleibenden Hülsensegmente wie Federzungen wirken, die die Kupplungsrastelemente federnd nach radial einwärts beaufschlagen. Vorzugsweise ist diese axial breitere der beiden Ringnuten axial geringfügig länger als der in ihr aufzunehmende Halteabschnitt, so daß dieser also mit einem geringen axialen Spiel axial festgelegt ist. Dies hat zur Folge, daß das Einrasten des Halteabschnitts des Steckers in die Ringnut der Buchse bei Handmontage gut und sicher hörbar und fühlbar ist. Ein solches Rastverhalten ist erforderlich und wünschenswert, wenn die Steckverbindung an einem Ort vorgenommen werden muß, der nur schwer zugänglich und/oder nicht einsehbar ist. Solche Situationen treten vor allem im Automobilbau stets wieder auf.

Die Rastelemente, die über die Axialschnitte hinweg gemeinsam eine nach radial einwärts vorspringende Ringrippe bilden, weisen, von außen in die Buchse hineingesehen, eine mit relativ kleinem Kegelwinkel ausgebildete Kegelfläche auf, während sie von innen nach außen gesehen einen steileren Flankenanstieg, also einen deutlich größeren Konuswinkel aufweisen. Durch diese Ausgestaltung wird erreicht, daß der Stecker zwar leicht und ohne nennenswerten Kraftaufwand in die Buchse eingesteckt werden kann, dann aber nur noch unter Überwindung der steilen Haltekonusfläche mit relativ großem Kraftaufwand aus der Buchse herausgelöst werden kann. Dieses Lösen ist jedoch auch mit einem nur minimalen tatsächlichen Krafteinsatz leicht dadurch zu bewirken, daß im Bereich des aus der Buchse herausragenden Griffteils zwischen dem als Widerlager wirkenden und ausgebildeten Kragen des Rastfederkranzes der Buchse und dem schlauchseitig axial außenliegenden Ringflansch des Steckers ein Hebelwerkzeug eingesetzt wird, mit dem der Stecker aus dem Rasteingriff der Kupplungsbuchse gelöst werden kann. Ein solches Werkzeug kann beispielsweise ein Schraubenschlüssel geeigneter Größe oder ein Schraubendreher sein.

Die Erfindung ist im folgenden anhand eines Ausführungsbeispiels in Verbindung mit den Zeichnungen näher erläutert. Es zeigen:

Fig. 1    im Axialschnitt ein Ausführungsbeispiel der lösbaren Steckkupplung für Schläuche, hier speziell ein lösbar steckbares Y-Verteilerstück;

Fig. 2    im Axialschnitt und in vergrößerter Teildarstellung ein Ausführungsbeispiel eines für die Steckkupplung verwendbaren, als "D-Ring" bezeichneten Dichtringes; und

Fig. 3    in axialer Seitensicht von der Einsteckseite her einen Stecker der in Fig. 1 gezeigten Art mit partiell als Außensechskant ausgebildetem Halteabschnitt.

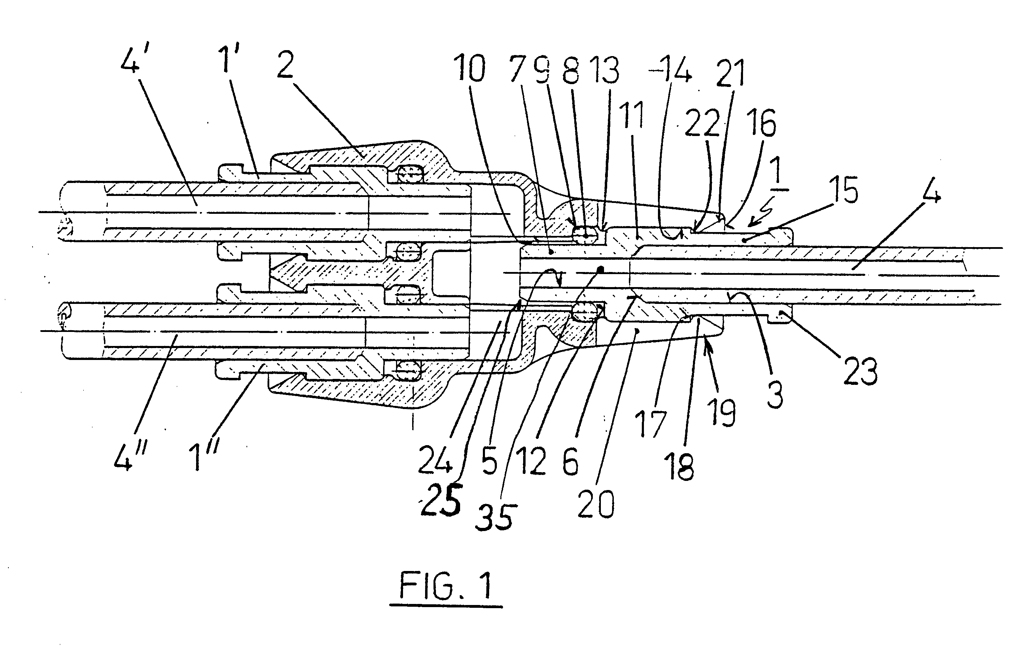

Die Steckkupplung gemäß der Erfindung ist in Fig. 1 im Axialschnitt dargestellt. Da die drei gezeigten Steckanschlüsse unter sich identisch sind, ist im folgenden der einfacheren Darstellung halber nur der rechte Teil des Verteilerstücks berücksichtigt, der identisch wie die beiden links liegenden Anschlüsse ausgebildet ist.

In diesem Sinne besteht die Steckkupplung gemäß der Erfindung, wie der Fig. 1 zu entnehmen ist, aus einem Stecker 1, der in einer Kupplungsbuchse 2 unter Herstellung einer fluiddichten Verbindung eingesteckt ist. Der Stecker 1 weist eine mit zwei verschiedenen Mensuren und einem Übergangsabschnitt ausgebildete durchgehende beidseitig offene Bohrung 35 auf. Der schlauchseitige Abschnitt 3 dieser Steckerbohrung dient der Aufnahme des anzuschließenden Schlauches 4, und hat zu diesem Zweck einen Innendurchmesser, der zumindest im wesentlichen gleich dem Außendurchmesser des hinsichtlich seines Durchmessers größten einzusteckenden Schlauches ist. Der enger mensurierte einsteckseitige Abschnitt 5 der Innenbohrung 35 des Steckers hat einen Durchmesser, der zumindest im wesentlichen gleich dem Innendurchmesser des Schlauches 4 ist.Der Übergangsbereich 6 zwischen dem Steckerbohrungsabschnitt 3, der den Schlauch 4 aufnimmt, und dem engeren Bohrungsabschnitt 5 ist konisch ausgebildet, und zwar zum einen, um innerhalb der unvermeidbaren Fertigungstoleranzschwankung einen Schlauchabschnitt mit relativ kleinem Durchmesser gut zentrieren zu können, auch um Schlauchabschnitte mit von vornherein kleineren Außendurchmessern zentrieren zu können, andererseits, um die Herstellung einer mechanisch festen fluiddichten Schweißverbindung zwischen dem Schlauchende und dem Stecker durch Reibschweißen zu gewährleisten.

Einsteckseitig weist der Stecker 1 einen außen zylindrischen stiftartigen Abschnitt 7 auf, der bei der in Fig. 1 dargestellten hergestellten Steckverbindung durch einen O-Ring 8 aus gummielastischem Werkstoff hindurchgreift. Der O-Ring 8 liegt in einer Ringnut 9, die in der Wand einer im wesentlichen zylindrischen Innenbohrung 10 der Kupplungsbuchse 2 ausgebildet ist. Beim Einschieben des Steckerstiftes 7 in die Kupplungsbuchse 2 und damit beim Hindurchschieben des Stiftes 7 durch den O-Ring 8 wird dieser so verpreßt, daß die Innenwand der Kupplungsbuchse 2 und der Stift 7 des Steckers 1 fluiddicht miteinander verbunden sind.

Schlauchseitig an den Steckerabschnitt 7 anschließend ist der zylindrische Außenmantel des Steckers 1 in einem Halteabschnitt 11 verstärkt ausgebildet.Im Übergang vom Steckerabschnitt 7 zum Halteabschnitt 11 ist eine kreisringförmige Ringschulter 12 ausgebildet, die bei bestimmungsgemäß in die Kupplungsbuchse eingestecktem Stecker an die , bezogen auf die Kupplungsbuchse 2, axial innenliegende ringförmige Begrenzungswand 13 einer zweiten Ringnut 14 anschlägt, die nach axial auswärts an die Ringnut 9 für den Dichtring 8 angrenzend in der Bohrung 10 der Kupplungsbuchse 2 ausgebildet ist.

Schlauchseitig geht der verstärkte Halteabschnitt 11 in einen Griffteil 15 über, dessen Außendurchmesser kleiner als der Außendurchmesser des Steckers im Bereich des Halteabschnittes 11 ist, und der axial so lang ausgebildet ist, daß er aus dem Kragen 16 der Kupplungsbuchse 2 axial herausragt. Der Übergang von dem Außenmantel des Halteabschnitts 11 zum Außenmantel des Griffteils 15 ist als radiale Kreisringfläche oder zurückspringende Ringschulter 17 ausgebildet. Die Ringschulter 17 des Steckers 1 dient dem Rasteingriff von Rastelementen 18. Die Rastelemente 18 sind in dem in Fig. 1 gezeigten Ausführungsbeispiel als radial einwärts in die Bohrung 10 der Kupplungsbuchse 2 hinein vorspringende Ringrippenelemente mit im Axialschnitt unregelmäßig dreieckigem Profil ausgebildet. Diese Rastelemente 18 sind im Bereich des Kragens 16 der Buchse 2 einstückig an diese angeformt bzw. mit dieser ausgebildet. Die Buchse 2 weist außerdem axiale Einschnitte 19 auf, die sich vom Kragen bis in den Bereich zwischen den beiden Ringnuten 9 und 14 erstrecken. Dadurch entsteht ein Kranz elastischer Federzungen 20, die die an ihnen angeformten Rastelemente 18 federelastisch nach radial einwärts in den Rasteingriff mit der Ringschulter 17 des Steckers 1 zwingen. Dabei sind die Flanken 21,22 der Rastelemente 18 konisch ausgebildet, und zwar dergestalt, daß die, bezogen auf die Kupplungsbuchse 2, außenliegende Vorderflanke 21 einen relativ kleinen Kegelwinkel aufweist, um ein leichtes, nahezu widerstandsloses Einführen und Einstecken des Steckers 1 in die Kupplungsbuchse 2 zu ermöglichen, während die axial innenliegende rückwärtige Flanke 22 als relativ steile Kegelfläche, also als Kegelfläche mit relativ großem Kegelöffnungswinkel ausgebildet ist, um ein Herausziehen des Steckers 1 aus der Kupplungsbuchse 2 zwar nicht durch formschlüssigen Hintergriff auszuschließen, doch aber hinsichtlich des erforderlichen Kraftaufwandes zum Trennen der Kupplung so zu erschweren, daß ein versehentliches Herausziehen des Steckers aus der Buchse nicht erfolgen kann. Bei sonst unveränderten Werkstoffparametern und Formparametern ist ersichtlich, daß die sowohl für das Einstecken als auch für das Entkuppeln im Einzelfall erforderlichen Kräfte durch den Grad der Schrägstellung der kegeligen Flankenflächen 21,22 eingestellt werden kann.

Um die zum Trennen des Steckers 1 aus der Kupplungsbuchse 2 erforderliche Kraft mühelos und ohne effektiven großen Krafteinsatz aufbringen zu können, ist am Griffteil 15, diesen schlauchseitig abschließend, ein Außenflansch 23 ausgebildet, dessen Abstand vom Kragen 16 der Kupplungsbuchse 2 so bemessen ist, daß ein Hebelwerkzeug einsetzbar und nutzbar ist. Ein solches "Hebelwerkzeug" kann beispielsweise ein kleiner Maulschlüssel, der Arbeitskopf eines Schraubendrehers oder notfalls auch eine Münze sein.

In der aus Fig. 1 ersichtlichen Weise ist der Innendurchmesser der Bohrung 10 der Kupplungsbuchse 2 zwar nicht viel, aber doch deutlich größer als der Außendurchmesser des Steckerstiftes 7 ausgebildet, so daß das Einführen des Steckers 1 in die Kupplungsbuchse 2 im Bereich des Steckerstiftes 7 praktisch berührungsfrei erfolgen kann, wenn von der bestimmungsgemäßen Verpressung des Dichtringes 8 abgesehen wird.

Im Bereich des Halteabschnitts 11 sind der Außendurchmesser des Halteabschnitts 11 des Steckers 1 und der Innendurchmesser der Sohle der Nut 14 so aufeinander abgestimmt, daß beide Flächen bündig und gegebenenfalls unter geringer Vorspannung der Federzungen 20 aneinanderliegen. Dadurch wird ein guter und mechanisch fester Sitz des Steckers 1 in der Kupplungsbuchse 2 erreicht, ohne dafür den Nachteil signifikanter Einsteckkräfte in Kauf nehmen zu müssen, wie dies für die Herstellung eines Reibschlusses erforderlich wäre. Dabei kann der Steckersitz dadurch verbessert werden, daß der Außenmantel des Halteteils 11 und die Sohle der Ringnut 14 streng flächenkomplementär, vorzugsweise zylindrisch, und im Rahmen der konstruktiv verfügbaren oder zulässigen Baulänge der Kupplungsbuchse 2 axial möglichst lang ausgebildet sind.

Als Ausführungsbeispiel für die Steckkupplung gemäß der Erfindung ist in Fig. 1 ein 1-2-Verteilerstück dargestellt. Über den Steckerstiftabschnitt 7 bzw. dessen Bohrung 5 öffnet sich der angeschlossene Schlauch 4 frei in eine dosenförmige Verteilerkammer 24, in die sich axial gegenüberliegend über Stecker 1', 1" Schläuche 4', 4" frei mit dem Schlauch 4 kommunizierend öffnen. Die Stecker 1', 1" sind identisch baugleich mit dem vorstehend ausführlich beschriebenen Stecker 1 ausgebildet.

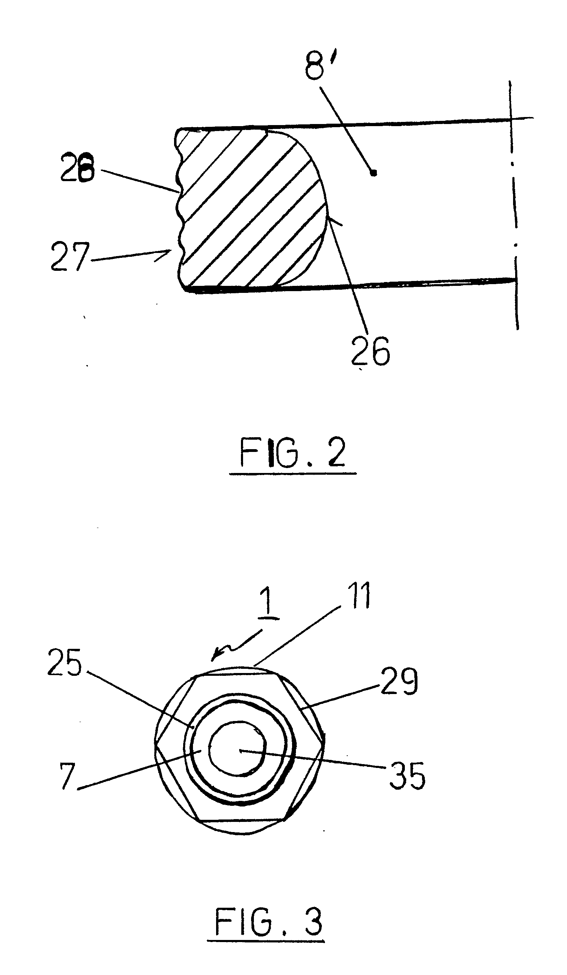

Wie bereits eingangs erwähnt, ist der in Fig. 1 dargestellte Dichtring 8 vorzugsweise ein D-Ring. Ein solcher D-Ring ist in der Fig. 2 im Axialschnitt und in vergrößerter Teildarstellung gezeigt. Das D-förmige Schnurringprofil liegt dabei so, daß die zylindrische Außenfläche 27 nach radial außen weist, also bei eingebautem Zustand in der Sohle der Nut 9 (Fig. 1) liegt, während der halbporusförmige gerundete Profilabschnitt 26 des Schnurprofils dieses D-Ringes nach radial innen zur Ringmitte weist.

Die zylindrische Außenfläche des D-Ringes kann sowohl plan als auch in der in Fig. 2 gezeigten Weise mit Mikrorillen versehen ausgebildet sein. Diese Mikrorillen 28 sind nur Bruchteile eines Millimeters Tiefe in sich geschlossen in der Radialebene des Ringes auf der zylindrischen Außenmantefläche umlaufende Rillen, die in der in Fig. 2 gezeigten Weise insbesondere über die gesamte Ringhöhe gleichmäßig verteilt angeordnet sind. Durch diese mikrorillierung wird nicht nur ein verbessertes Dichtverhalten des Dichtringes bzw. des hier gezeigten D-Ringes auf der Sohle der Nut 9 bzw. gegenüber der Steckerbuchse erzielt, sondern kann durch ein verbessertes Anhaften des Ringes auf der Nutsohle, die komplementär zum D-Ringprofil ausgebildet ist, erzielt werden. Dadurch kann auch insgesamt eine mechanische Stabilisierung der Steckdichtung erzielt werden.

Eine weitere Ausgestaltung des Steckers ist schließlich in Fig. 3 gezeigt. Die Darstellung zeigt den Stecker 1 in axialer Seitensicht von der Einsteckseite her. Wie aus der Fig. 3 ersichtlich, ist der einsteckseitige vordere Abschnitt des Halteabschnitts 11 des Steckers 1 als Sechskant 29 ausgebildet, der in der zuvor beschriebenen Weise zum Angriff von Montagewerkzeugen, hilfsweise aber auch zur Drehfixierung des Steckers in der Buchse dient.

**Patentansprüche**

1. Lösbare Steckkupplung für Schläuche (4) mit Kupplungsbuchse (2) und mit dem anzuschließenden Schlauch fest verbundenem beidseitig offenem hülsenförmigem Stecker (1), der einsteckseitig einen außen zylindrischen stiftförmigen Abschnitt (7), der bei hergestellter Steckverbindung einen Dichtring (8) aus elastischem Werkstoff zur Abdichtung zwischen Stecker (1) und Kupplungsbuchse (2) durchgreift, einen sich an den Steckerstift (7) anschließenden verstärkten Halteabschnitt (11) mit schlauchseitig zurückspringender Ringschulter (17) für einen Eingriff von auf der Kupplungsbuchse (2) angeordneten Befestigungselementen in Form radial federnder Rastzungen (20), die nach radial innen vorspringende keilförmige Rastelemente (18) aufweisen und mit der Ringschulter (17) in einen federnden Rasteingriff bringbar sind, und einen sich daran anschließenden verjüngten Abschnitt (15) aufweist, der sich bei in die Kupplungsbuchse (2) eingestecktem Stecker (1) aus der Kupplungsbuchse heraus erstreckt, dadurch **gekennzeichnet,** daß der Dichtring (8) in einer in der Kupplungsbuchse (2) angeordneten Ringnut (9) vormontierbar ist, daß die Rastelemente (18) im Kragen (16) des Federhülsenabschnittes der Kupplungsbuchse (2) eine nach radial innen vorspringende umlaufende Ringrippe bilden, deren beide Flankenflächen (21,22) konisch verlaufen, und daß der Stecker (1) an seiner äusseren Stirnseite einen Außenflansch (23) aufweist, und zwar in einem solchen Abstand zu dem als Werkzeugwiderlager ausgebildeten Kragen (16) der Kupplungsbuchse (2), der gleichzeitig Rastfederkragen ist, daß zwischen dem Kragen (16) der Kupplungsbuchse (2) und dem Aussenflansch (23) des Steckers (1) ein Hebelwerkzeug zum Lösen des Steckers (1) unter Aufbringen einer in Richtung der Längsachse der Kupplung (1,2) wirkenden Kraft aus dem Buchsen-Rasteingriff angesetzt werden kann.

2. Kupplung nach Anspruch 1,
dadurch **gekennzeichnet**,
daß die axial innere Flankenfläche (22) bezüglich der Längsachse der Kupplung (1,2) stärker geneigt verläuft als die axial äussere Flankenfläche (21).

3. Kupplung nach einem der Ansprüche 1 oder 2,
dadurch **gekennzeichnet**,
daß der Stecker (1) schlauchseitig einen Innendurchmesser aufweist, der zumindest im wesentlichen gleich oder größer als der Außendurchmesser des anzuschließenden Schlauches (4) ist, und daß der Schlauch (4) in diesen Abschnitt (3) der durchgehenden Steckerhülsenbohrung (35) eingesteckt und fluiddicht befestigt ist, insonderheit verschweißt und/oder verklebt ist oder durch Einspritzen, Eingießen, Umspritzen, Umgießen oder Anvulkanisieren hermetisch dicht befestigt ist.

4. Kupplung nach Anspruch 3,
dadurch **gekennzeichnet**,
daß der schlauchseitig weiter mensurierte Bohrungsabschnitt (3) des Steckers (1) konisch in eine stiftseitig enger mensurierte Bohrung (5) übergeht, deren Durchmesser zumindest im wesentlichen gleich dem Innendurchmesser des anzuschließenden Schlauches (4) ist.

5. Kupplung nach Anspruch 4,
dadurch **gekennzeichnet**,
daß die Mantelfläche des Übergangskonus (6) zwischen den beiden koaxialen Innenbohrungsabschnitten (3,5) der Steckerhülse (1) um 40° bis 50° gegen die Mittelachse des Steckers (1) geneigt ist.

6. Kupplung nach einem der Ansprüche 1 bis 5,
dadurch **gekennzeichnet**,
daß der Übergang vom Steckerstiftabschnitt (7) zum Halteabschnitt (11) des Steckers (1) als radiale Ringschulter (12) ausgebildet ist, die bei in die Kupplungsbuchse (2) eingesetztem Stecker (1) an einer Anschlagringschulter (13) anliegt, die in der Stecker-Aufnahmebohrung (10) der Kupplungsbuchse (2) ausgebildet ist.

7. Kupplung nach einem der Ansprüche 1 bis 6,
dadurch **gekennzeichnet**,
daß die Kupplungsbuchse (2) und die Steckerhülse (1) Kunststoffspritzgießteile sind und der anzuschließende Schlauch (4) ebenfalls aus einem Kunststoff besteht, und zwar aus dem gleichen Kunststoff wie der Stecker (1).

8. Kupplung nach den Ansprüchen 5 und 7,
dadurch **gekennzeichet**,
daß der Schlauchabschnitt (4) durch Reibschweißen mit der Übergangskonusfläche (6) im Stecker (1) bündig und fluiddicht verschweißt ist.

9. Kupplung nach einem der Ansprüche 1 bis 8,
dadurch **gekennzeichnet**,
daß der Steckerstiftabschnitt (7) an seiner einsteckseitigen Stirnseite eine Abfasung (25) aufweist.

10. Kupplung nach einem der Ansprüche 1 bis 9,
dadurch **gekennzeichnet**,
daß der Dichtring (8') einen D-förmigen Schnurquerschnitt aufweist, und zwar dergestalt, daß der gerundete Profilabschnitt (26), bezogen auf den Dichtring (8'), radial innen liegt, während der zylindrische Profilabschnitt (27) radial außen liegt, also gegen die Sohle der Ringnut (9) dichtend anliegt.

11. Kupplung nach Anspruch 10,
dadurch **gekennzeichnet**,
daß der D-Ring (8') auf seiner radial außenliegenden Profilfläche (27) mit in sich geschlossen in der Radialebene umlaufenden Mikrorillen (28) versehen ist.

12. Kupplung nach Anspruch 11,
dadurch **gekennzeichnet**,
daß die Mikrorillen (28) in radialer Richtung eine Tiefe von nur Bruchteilen eines Millimeters aufweisen und sich axial über die gesamte Höhe der zylindrischen Profilfläche (27) erstrecken.

13. Kupplung nach einem der Ansprüche 1 bis 12,
dadurch **gekennzeichnet**,
daß der Halteabschnitt (11) mit geringem axialen Spiel zwischen dem Rastringsteg (18) und dem Anschlagringsteg (13) gehalten ist.

14. Kupplung nach einem der Ansprüche 1 bis 13,
dadurch **gekennzeichnet**,
daß zumindest ein axialer Abschnitt des Außenmantels des Halteabschnitts (11) des Steckers (1) als Sechskantprofil (29) oder in anderer Weise unrund ausgebildet ist.

15. Verwendung der Kupplung nach einem der Ansprüche 1 bis 14 zum Verbinden und Verzweigen von Schlauchleitungen in pneumatischen Unterdruck- und Überdruckleitungssystemen, insbesondere Stell- und Steuerleitungssystemen, speziell im Kraftfahrzeugbau.

**Claims**

1. Releasable plug-in coupling for tubes (4) with coupling bush (2) and sleeve-formed plug (1) open on both sides being firmly fastened to the tube to be connected with having at the plug-in side an outside cylindrical pin-formed portion (1) penetrating an annular sealing (8) made of elastic material for obturating between the plug (1) and a coupling bush (2) when the plug-in connection is put, a reinforced locking portion (11) close to the plug pin (7) with a back-going ring shoulder (17) on the tube side for a catching by fastening elements in form of radially elastic detent springs (20) arranged on the coupling bush (2), which show wedge-shaped catch elements (18) protruding radially to the inside and which can be snapped in at the ring shoulder (17), and close thereto a diminished portion (15) extending out of the coupling bush when the plug (1) is connected to the coupling bush (2),
**characterized** in that
the annular sealing (8) may be pre-assembled in a snap ring groove arranged in the coupling bush (2), that the catch elements (18) in the collar (16) of the snap bush portion of the coupling bush (2) form a rotary gill protruding radially to the inside and whose two flank surfaces (21,22) are cone-shaped, that the plug (1) shows an outer flange (23) on its outer front in such a distance from the collar (16) of the coupling bush (2) formed as a shoulder to apply tools and being contemporaneously catch-spring collar, that a lever tool can be introduced between the collar (16) of the coupling bush (2) and the outer flange (23) of the plug (1) for loosening the plug (1) from the bush catch by bringing up a force in the direction of the longitudinal axis of the coupling (1,2).

2. Coupling according to claim 1,
**characterized** in that
the axially inner flank surface (22) is more inclined relative to the longitudinal axis of the coupling (1,2) than the axially outer flank surface (21).

3. Coupling according to one of the claims 1 or 2,
**characterized** in that
the plug (1) shows an inner diameter on the tube side being at least essentially equal or larger than the outer diameter of the tube to be connected (4), and that the tube (4) is plugged into this portion (3) of the continuous plug sleeve bore (35) and attached there fluid-tightly, in particular welded and/or pasted up or is attached hermetically by injection, pouring-in, extrusion coating, casting-in or moulding-on.

4. Coupling according to claim 3,
**characterized** in that
the bore portion (3) of the plug (1) being larger on the tube side passes over conically into a narrower bore (5) on the plug side, whose diameter is essentially equal to the inner diameter of the tube (4) to be connected with.

5. Coupling according to claim 4,

**characterized** in that
the surface area of the passing cone (6) between the two coaxial inner bore portions (3,5) of the plug sleeve (1) is inclined by 40° to 50° with respect to the middle axis of the plug (1).

6. Coupling according to one of the claims 1 to 5,
**characterized** in that
the passing from the plug pin portion (7) to the keeping portion (11) of the plug (1) is formed as radial ring shoulder (12) sitting close to a limit stop ring shoulder (13) when the plug (1) is connected to the coupling bush (2), said limit stop ring shoulder (13) being modelled in the receiver bore (10) of the coupling bush (2).

7. Coupling according to one of the claims 1 to 6,
**characterized** in that
the coupling bush (2) and the plug sleeve (1) are plastic injection moulded parts and the tube (4) to be connected is made of plastics, too, namely the same plastics as the plug (1).

8. Coupling according to the claims 5 and 7,
**characterized** in that
the tube portion (4) is welded fluid-tightly and evenly to the passing cone surface (6) in the plug (1) by friction welding.

9. Coupling according to one of the claims 1 to 8,
**characterized** in that
the plug pin portion (7) shows a bevel (25) at its plug-in face.

10. Coupling according to one of the claims 1 to 9,
**characterized** in that
the conical nipple (8') shows a D-shaped cord cross section, so that the rounded profile portion (26) lies radially inside with respect to the conical nipple (8'), while the cylindrical profile portion (27) lies radially outside, thus sitting close to the sole of the snap ring groove (9) tightening.

11. Coupling according to claim 10,
**characterized** in that
the D-ring (8') on its radially outside profile surface (27) is equipped with rotary microgrooves (28) closed in themselves in the radial plane.

12. Coupling according to claim 11,
**characterized** in that
the microgrooves (28) in the radial direction show a depth of only some fractions of a millimeter and extend axially over the whole height of the cylindrical profile surface (27).

13. Coupling according to one of the claims 1 to 12,

**characterized** in that

the keeping portion (11) is kept between the detent ring shoulder (18) and the limit stop ring shoulder (13) with little clearance.

14. Coupling according to one of the claims 1 to 13,

**characterized** in that

at least an axial section of the outer surface of the keeping portion (11) of the plug (1) is formed as a hexagon profile (29) or in another not circular way.

15. Use of the coupling according to one of the claims 1 to 14 for connecting and branching of hose pipes in pneumatic low pressure or overpressure pipe systems, in particular adjustment and control line systems, especially in motor vehicle construction.

**Revendications**

1. Connecteur à fiche, détachable, pour flexibles (4), comportant une douille d'accouplement (2) et une fiche (1) en forme de douille, ouverte des deux côtés, reliée de façon fixe avec le flexible à raccorder, fiche qui, du côté de l'enfichage, présente une partie (7) extérieurement cylindrique, en forme de broche, qui, lorsque le raccordement par fiche est réalisé, traverse une bague d'étanchéité (8) en matière élastique pour l'étanchéité entre la fiche (1) et la douille d'accouplement (2), une partie de retenue (11) renforcée, faisant suite à la broche d'enfichage (7) et comportant, côté flexible, un épaulement annulaire (17) à prise antirecul, pour saisir des organes de fixation disposés sur la douille d'accouplement (2), sous la forme de languettes de retenue (20) élastiques radiales, qui présentent des organes de retenue (18) en forme de coins dépassant radialement vers l'intérieur, et que l'on peut mettre en prise de retenue élastique avec l'épaulement annulaire (17), et, à la suite, une partie plus mince (15), qui dépasse de la douille d'accouplement (2) lorsque la fiche (1) est enfoncée dans la douille d'accouplement (2),

caractérisé en ce que,

la bague d'étanchéité (8) peut être préalablement montée dans une rainure annulaire (9), disposée dans la douille d'accouplement (2), en ce que les organes de retenue (18) forment, dans le collet (16) de la partie manchon élastique de la douille d'accouplement (2), une nervure annulaire périphérique dépassant radialement vers l'intérieur, dont les deux surfaces de flancs (21, 22) ont une forme conique, et en ce que la fiche (1) présente, sur la face de son extrémité extérieure, une bride extérieure (23), et cela à une distance telle par rapport au collet (16) de la douille d'accouplement (2), réalisé sous la forme d'un appui pour un outil, et servant en même temps de collet élastique de retenue, qu'entre le collet (16) de la douille d'accouplement (2) et la bride extérieure (23) de la fiche (1), on puisse faire agir un outil faisant levier pour libérer la fiche (1) de la prise douille - organe de retenue, en exerçant un effort agissant dans la direction de l'axe longitudinal du connecteur détachable à fiche (1, 2).

2. Connecteur suivant la revendication 1, caractérisé en ce que la surface du flanc (22), située axialement vers l'intérieur, a une inclinaison par rapport à l'axe longitudinal du connecteur (1, 2) plus forte que la surface du flanc (21), située axialement vers l'extérieur.

3. Connecteur suivant l'une des revendications 1 ou 2, caractérisé en ce que la fiche (1) présente, du côté flexible, un diamètre intérieur qui est essentiellement au moins égal ou supérieur au diamètre extérieur du flexible (4) à enficher, et en ce que le flexible (4) est enfoncé et fixé, de façon étanche aux fluides, dans cette partie (3) de l'alésage traversant intérieur (35) de la fiche, et, en particulier, est soudé et/ou collé ou est fixé de façon hermétiquement étanche, par injection, par coulée sur le pourtour, par extrusion, ou par vulcanisation,

4. Connecteur suivant la revendication 3, caractérisé en ce que l'autre partie (3) de l'alésage, calibrée plus large côté flexible, se prolonge en cône dans un alésage (5) coté broche calibré plus étroitement, dont le diamètre intérieur est essentiellement au moins égal au diamètre intérieur du flexible (4) à raccorder.

5. Connecteur suivant la revendication 1, caractérisé en ce que la surface extérieure du cône de transition (6) entre les deux parties coaxiales (3, 5) de l'alésage intérieur du manchon de la fiche (1) a une inclinaison de 40° à 50° par rapport à l'axe central de la fiche (1).

6. Connecteur suivant l'une quelconque des revendications 1 à 5, caractérisé en ce que la transition entre la partie (7) de la broche de la fiche et la partie de retenue (11) de la fiche (1) est réalisée sous la forme d'un épaulement annulaire radial (12), qui, lorsque la fiche (1) est enfoncée dans la douille d'accouplement (2), vient contre un épaulement annulaire (13) faisant butée, réalisé dans l'alésage (10) de la douille d'accouplement (2) destiné à recevoir la fiche (1).

7. Connecteur suivant l'une quelconque des revendications 1 à 6, caractérisé en ce que la douille d'accouplement (2) et la douille de la fiche (1) sont des pièces de matière plastique obtenues par coulée et injection et que le flexible (4) à raccorder est, de même, constitué de matière plastique, et en particulier de la même matière plastique que la fiche (1).

8. Connecteur suivant la revendication 5 et la revendication 7, caractérisé en ce que la partie du flexible (4) est soudée, de façon à affleurer et de façon étanche aux fluides, dans la fiche (1), par soudage par friction, avec la surface conique de transition (6).

9. Connecteur suivant l'une quelconque des revendications 1 à 8, caractérisé en ce que la partie broche d'enfichage (7) présente sur sa face frontale d'enfichage un chanfrein (25).

10. Connecteur suivant l'une quelconque des revendications 1 à 9, caractérisé en ce que la bague d'étanchéité (8') présente une section de joint en forme de D, et cela de telle façon que la partie arrondie (26) du profil se trouve radialement vers l'intérieur par rapport au joint d'étanchéité (8'), tandis que la partie cylindrique extérieure (27) se trouve radialement vers l'extérieur, c'est-à-dire se trouve contre le fond de la rainure annulaire (9), en faisant étanchéité.

11. Connecteur suivant la revendication 10, caractérisé en ce que le joint en D (8'), sur la surface de son profil (27) située radialement vers l'extérieur, est muni de microsillons (28) circulaires, se refermant sur eux-même, dans le plan radial.

12. Connecteur suivant la revendication 11, caractérisé en ce que les microsillons (28) présentent, dans la direction radiale, une profondeur de seulement quelques fractions de millimètre et s'étendent axialement sur toute la hauteur de la surface cylindrique (27) du profil.

13. Connecteur suivant l'une quelconque des revendications 1 à 12, caractérisé en ce que la partie de retenue (11) est maintenue avec un faible jeu axial entre la bague annulaire de retenue (18) et la broche annulaire de butée (13).

14. Connecteur suivant l'une quelconque des revendications 1 à 13, caractérisé en ce qu'au moins une partie axiale de la surface extérieure de la partie de retenue (11) de la fiche (1) est réalisée sous la forme d'un profilé à six pans (29), ou d'une autre manière non ronde.

15. Utilisation du connecteur suivant l'une quelconque des revendications 1 à 14, pour réaliser le raccordement et la dérivation de conduites flexibles dans des systèmes pneumatiques en dépression ou en surpression, en particulier des systèmes de commande et de régulation, spécialement dans la construction automobile.

FIG. 1

FIG. 2

FIG. 3